# EUROPÄISCHE PATENTSCHRIFT

(11) **EP 1 003 928 B1**
(45) Veröffentlichungstag und Bekanntmachung des Hinweises auf die Patenterteilung: **16.04.2003**
(21) Anmeldenummer: 99932441.1
(22) Anmeldetag: 20.01.1999
(51) Int. Cl.: D06F 39/00, G05B 19/10, A47L 15/46

(54) **PROGRAMMGESTEUERTES HAUSHALTGERÄT MIT EINER BEDIENUNGSHANDHABE**
PROGRAMME-CONTROLLED HOUSEHOLD APPLIANCE WITH A MANUAL CONTROL ELEMENT
APPAREIL ELECTROMENAGER COMMANDE PAR PROGRAMME COMPORTANT UN BOUTON DE COMMANDE

(30) Priorität: 26.01.1998 DE 19802865
(43) Veröffentlichungstag der Anmeldung: 31.05.2000
(73) Patentinhaber: BSH Bosch und Siemens Hausgeräte GmbH, 81669 München (DE)
(72) Erfinder: Wöbkemeier, Martina, 10789 Berlin (DE)
(86) Internationale Anmeldenummer: EP9900366
(87) Internationale Veröffentlichungsnummer: WO99037848

(56) Entgegenhaltungen:
- EP-A- 0 396 915
- DE-A- 4 446 883
- DE-A- 19 615 357
- PATENT ABSTRACTS OF JAPAN vol. 017, no. 285 (C-1066), 2. Juni 1993 -& JP 05 015688 A (SANYO ELECTRIC CO LTD), 26. Januar 1993

## Beschreibung

Die Erfindung geht aus von einem programmgesteuerten Haushaltgerät mit einer Bedienungshandhabe, die mindestens eine Aus-Position und mehrere Schaltstellungen mit jeweils definierten Programmzusammenstellungen aufweist, deren Anwahl-Häufigkeit bzw. Verbrauchs-Intensität sich voneinander unterscheiden.

Ein derartiges Haushaltgerät ist aus DE 39 12 121 A1 bekannt. Hierin ist die Bedienungshandhabe aus einem Drehwahlschalter dargestellt, der eine Vielzahl von Schaltstellungen aufweist. Diesen sind jeweils in Gruppen geordnete, definierte Programmzusammenstellungen zugeordnet, die nach Temperaturschritten unterteilt sind. Da es sich hierbei um eine Waschmaschine handelt, betreffen die Temperaturangaben die Höchsttemperatur der jeweiligen Waschlauge. Außerdem sind einige Schaltstellungen seltener benötigten Sonderprogrammen ("Feinspülen", "Pumpen", "Schleudern" und "Stärken") zugeordnet. In der Mitte oben hat der Drehwahlschalter eine Aus-Position, die mit "Ende" bezeichnet ist. Bei dem bekannten Haushaltgerät sind in den jeweiligen Programmgruppen die Temperaturwerte und teilweise auch die Programmgruppen bzw. einzelne Sonderprog ramme so geordnet, daß ausgehend von der Aus-Position zuerst die am seltensten benötigten Programmzusammenstellungen angewählt bzw. überfahren werden müssen, ehe eine häufiger benötigte Programmzusammenstellung eingestellt werden kann. Beispielsweise werden bei der Programmgruppe "Kochwäsche/Buntwäsche" die mit einem Sparsymbol gekennzeichneten Temperaturschaltstellungen 60, 50, 40 und 30 erfahrungsgemäß häufiger benötigt, als die Schaltstellungen 95, 80 und 70. Daher müssen häufig die seltener gebrauchten Schaltstellungen 95, 80 und 70 überfahren werden, ehe ein Kochwäsche-Buntwäsche-Programm mit 60°, 50°, 40° oder 30° angewählt werden kann. Dasselbe ergibt sich in der entgegengesetzten Drehrichtung des Drehwahlschalters, wenn aus der Aus-Position ein Pflegeleicht-Fein-Programm angewählt werden muß, das häufiger gebraucht wird als ein Wolle-Programm oder als eines von den Sonderprogrammen "Feinspülen", "Pumpen", "Schleudern" oder "Stärken".

Der Erfindung liegt die Aufgabe zugrunde, die Bedienung eines programmgesteuerten Haushaltgerätes der eingangs genannten Art zu erleichtern.

Erfindungsgemäß wird diese Aufgabe bei einem programmgesteuerten Haushaltgerät der eingangs genannten Art dadurch gelöst, daß die Schaltstellungen ausgehend von der Aus-Position in absteigender Anwahl-Häufigkeit bzw. aufsteigender Verbrauchs-Intensität geordnet sind.

In zunehmendem Maße richtet sich die Anwahl-Häufigkeit auch nach der jeweiligen Verbrauchs-Intensität des Programmes. Beispielsweise ist ein 90°-Programm intensiver im Hinblick auf seinen Energie-Verbrauch als ein 30°-Programm. Daher wird es mit steigendem Bewußtsein für die Schonung von Ressourcen seltener angewählt, so daß es einen geringeren Rang bei der Anwahl-Häufigkeit einnimmt als ein 30°-Programm. Es sollte daher weiter von der Aus-Position entfernt liegen als das 30°-Programm. Dasselbe betrifft seltener benötigte Sonderprogramme.

Gemäß den Erfahrungen bei der Untersuchung von Verbrauchergewohnheiten ist es daher von Vorteil, wenn gemäß einer Weiterbildung der Erfindung, die am weitesten von der Aus-Position entfernten Schaltstellungen für Programmzusammenstellungen vorgesehen sind, die selten benötigte Sonderprogramme betreffen.

Sofern in automatisch gesteuerten Waschmaschinen Programmzusammenstellungen in Gruppen geordnet sind, sollten diese Gruppen in absteigender Anwahl-Häufigkeit geordnet sein. Dann kann es von besonderem Vorteil sein, wenn innerhalb dieser Programmgruppen die Zahlen für Temperaturwerte in einer aufsteigenden Reihe geordnet sind, dam it wenigstens innerhalb der Gruppen die Anwahl-Häufigkeit gemäß der Erfindung absteigend geordnet ist.

In einer automatisch gesteuerten Waschmaschine können selten benötigte Sonderprogramme das besondere Abpumpen der Wasch- oder Spüllauge und/oder ein Extraspülen und/oder ein Extraschleudern der Wäsche und/oder ein Einweichen undloder ein Stärken und/oder ein Bleichen und/oder ein Mixprogramm sein.

In besonders vorteilhafter Weise läßt sich die erfindungsgemäße Ausgestaltung bei einem Drehwahlschalter als Bedienungshandhabe realisieren. Vorteilhafterweise ist dann eine Aus-Position vorhanden und sind die Programmzusammenstellungen mit absteigender Anwahl-Häufigkeit bzw. ansteigender Verbrauchs-Intensität beiderseits der Aus-Position in beide Drehrichtungen des Drehwahlschalters gruppenweise verteilt.

Anhand eines in der Zeichnung dargestellten Ausführungsbeispiels ist die Erfindung nachstehend erläutert. Es zeigen
- Fig. 1: eine schematische Ansicht einer Bedienungsblende für eine Waschmaschine und
- Fig. 2: einen vergrößert dargestellten Ausschnitt aus dem Bereich des Drehwahlschalters in Fig. 1.

Die Bedienungsblende 1 einer Waschmaschine enthält regelmäßig an einer Seite eine Griffplatte 2 für eine dahinter angeordnete Waschmitteleinspülschale. Der übrige Bereich der Bedienungsblende 1 enthält einen Drehwahlschalter 3, einen Ein-/Ausschalter 4, eine Anordnung von Tasten 5 mit zugeordneten optischen Anzeigen 6 und einen Drehschalter 7 mit einem alphanumerischen Anzeigedisplay 8.

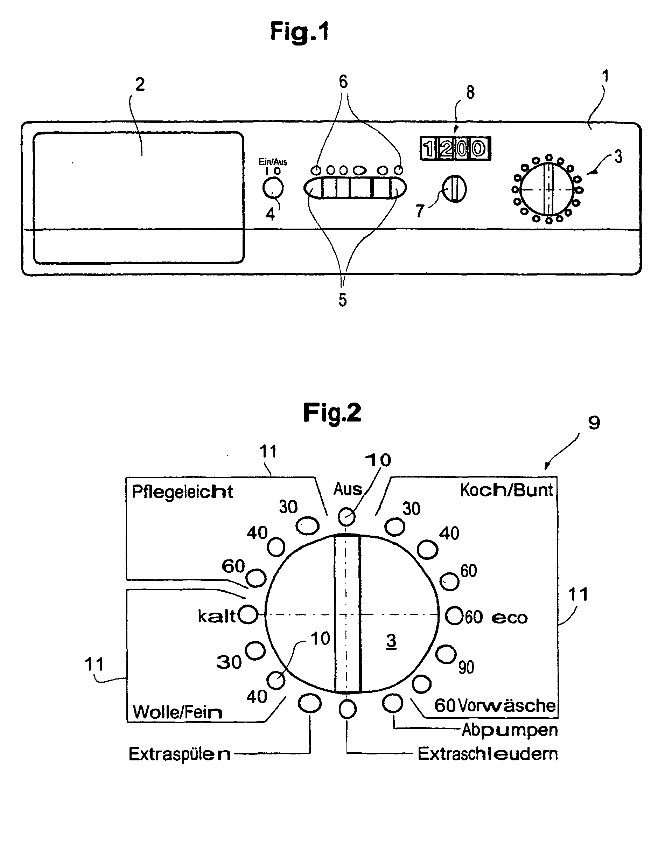

Der Drehwahlschalter 3 in Fig. 2 ist mit einer auf der Bedienungsblende 1 angeordneten Umfeldbedruckung 9 versehen, die für jede Schaltstellung des Drehwahlschalters einen Punkt 10 enthält. Die einzelnen Punkte sind teilweise durch Rahmenbedruckungen 11 zu Gruppen "Koch/Bunt", "Pflegeleicht" und "Wolle/Fein" zusammengefaßt. Innerhalb dieser Gruppen von Programmzusammenstellungen sind unterschiedliche Temperatur-Schaltstellungen definiert, die bei der Programmzusammenstellung "Koch/ Bunt" die Temperaturwerte 30,° 40°, 60°, "60° eco", 90° und "60° Vorwäsche" umfassen. Die Programmzusammenstellung "60° Vorwäsche" ist hier weiter abwärts angeordnet als das 90°-Programm, weil ein Koch/Bunt-60°-Programm mit Vorwäsche seltener gewählt wird als die davorstehenden Programme. In ähnlicher Weise sind die Schaltstellungen für die einzelnen Temperaturstufen bei den Programmen "Pflegeleicht" und "Wolle/Fein" geordnet. Da die dargestellten Sonderprogramme "Abpumpen", "Extraschleudern" und "Extraspülen" noch seltener gebraucht werden als die dargestellten Programmzusammenstellungen für die Programmgruppen, liegen sie am weitesten von der Aus-Position entfernt.

Für die jeweilige Ordnung der Programmgruppen zueinander und der Temperaturstufen innerhalb der Programmgruppen sind Erfahrungen maßgebend, die aus dem in Abständen untersuchten Verbraucherverhalten gewonnen werden. Sollte sich in einer Produktgruppe der Haushaltgerätebranche das Verbraucherverhalten verändern, so wird eine Anpassung der Ordnung von Schaltstellungen bei Bedienungshandhaben neuer Produkte stattfinden müssen. Bei anderen Haushaltgeräten als der hier dargestellten Waschmaschine gelten hinsichtlich der Ordnung von Programmzusammenstellungen selbstverständlich eigene Überlegungen bzw. Erkenntnisse aus den Untersuchungen der Verbraucherverhaltensweisen.

Das dargestellte Ausführungsbeispiel betrifft einen Drehwahlschalter. Die Erfindung kann selbstverständlich auch an anders gearteten Bedienungshandhaben dargestellt werden, die zwar eine Aus-Position und mehrere Schaltstellungen aufweisen, aber mechanisch andersartig aufgebaut sind. Beispielsweise kann eine Bedienungshandhabe longitudinal beweglich sein; dann müssen die Schaltstellungen ebenso longitudinal gemäß der Erfindung geordnet sein. Sollte eine Bedienungshandhabe anders als im dargestellten Ausführungsbeispiel sich nur in einer Richtung bewegen lassen, dann ist die erfindungsgemäße Ordnung nur in dieser einen Richtung darstellbar.

## Patentansprüche

1. Programmgesteuertes Haushaltgerät mit einer Bedienungshandhabe, die mindestens eine Aus-Position und mehrere Schaltstellungen mit jeweils definierten Programmzusammenstellungen aufweist, deren Anwahl-Häufigkeit bzw. Verbrauchs-Intensität sich voneinander unterscheiden, **dadurch gekennzeichnet, daß** die Schaltstellungen ausgehend von der Aus-Position in absteigender Anwahl-Häufigkeit bzw. aufsteigender Verbrauchs-Intensität geordnet sind.

2. Haushaltgerät nach Anspruch 1, **dadurch gekennzeichnet, daß** die absteigende Anwahl-Häufigkeit bzw. aufsteigende Verbrauchs-Intensität durch eine aufsteigende Reihe von Zahlen für Temperaturwerte dargestellt sind.

3. Haushaltgerät nach Anspruch 1 oder 2, **dadurch gekennzeichnet, daß** die am weitesten von der Aus-Position entfernten Schaltstellungen für Programmzusammenstellungen vorgesehen sind, die selten benötigte Sonderprogramme betreffen.

4. Haushaltgerät nach einem der Ansprüche 1 bis 3, insbesondere automatische Waschmaschine, **dadurch gekennzeichnet, daß** die Programmzusammenstellungen in Gruppen ("Koch/ Bunt", "Pflegeleicht", "Wolle/Fein", "Vorwäsche") geordnet sind.

5. Haushaltgerät nach Anspruch 4, **dadurch gekennzeichnet, daß** daß die Gruppen in absteigender Anwahl-Häufigkeit bzw. in aufsteigender Verbrauchs-Intensität geordnet sind.

6. Haushaltgerät nach Anspruch 4 oder 5, **dadurch gekennzeichnet, daß** innerhalb von Programmgruppen die Zahlen für Temperaturwerte in einer aufsteigenden Reihe geordnet sind.

7. Haushaltgerät nach Anspruch 3 und einem der Ansprüche 4 bis 6, **dadurch gekennzeichnet, daß** als selten benötigte Sonderprogramme das besondere Abpumpen der Wasch- oder Spüllauge und/oder ein Extraspülen und/oder ein Extraschleudern der Wäsche und/ oder ein Einweichen und/oder ein Stärken und/oder ein Bleichen und/oder ein Mixprogramm vorgesehen sind.

8. Haushaltgerät nach einem der vorstehenden Ansprüche, **dadurch gekennzeichnet, daß** die Bedienungshandhabe ein Drehwahlschalter ist.

9. Haushaltgerät nach Anspruch 8, **dadurch gekennzeichnet, daß** eine Aus-Position vorhanden ist und die Programmzusammenstellungen mit absteigender Anwahl-Häufigkeit bzw. Verbrauchs-Intensität beiderseits der Aus-Position in beide Drehrichtungen des Drehwahlschalters gruppenweise verteilt sind.

## Claims

1. Program-controlled domestic appliance with a control handle which has at least an off position and several switch settings with respectively defined program combinations, the selection frequency or consumption intensity of which differ from one another, **characterised in that** the switch settings are arranged, starting from the off position, in descending selection frequency or ascending consumption intensity.

2. Domestic appliance according to claim 1, **characterised in that** the descending selection frequency or ascending consumption intensity are represented by an ascending series of numbers for temperature values.

3. Domestic appliance according to claim 1 or 2, **characterised in that** the switch settings furthest from the off position are provided for program combinations which relate to seldom required special programs.

4. Domestic appliance according to one of claims 1 to 3, particularly an automatic washing machine, **characterised in that** the program combinations are arranged in groups ('boiling/coloureds', 'easy-care', 'wool/delicate', 'prewash').

5. Domestic appliance according to claim 4, **characterised in that** the groups are arranged in descending selection frequency or in ascending consumption intensity.

6. Domestic appliance according to claim 4 or 5, **characterised in that** within program groups the numbers for temperature values are arranged in an ascending series.

7. Domestic appliance according to claim 3 and one of claims 4 to 6, **characterised in that** special pumping out of washing or rinsing solution and/or an extra rinsing and/or an extra spinning of the laundry and/or a soaking and/or a starching and/or a bleaching and/or a mixed program are provided as seldom required special programs.

8. Domestic appliance according to one of the preceding claims, **characterised in that** the control handle is a rotary selector switch.

9. Domestic appliance according to claim 8, **characterised in that** an off position is present and the program combinations are distributed in groups with descending selection frequency or consumption intensity on both sides of the off position in both rotational directions of the rotary selector switch.

## Revendications

1. Appareil électroménager commandé par programme et comprenant un bouton de commande avec au moins une position d'arrêt et plusieurs positions de réglage à chacune desquelles est affectée une combinaison de programmes définie, lesdites combinaisons de programmes se distinguant les unes des autres par la fréquence de sélection resp. par l'intensité de la consommation, **caractérisé en ce que**, partant de la position d'arrêt, les positions de réglage sont placées par ordre décroissant de fréquence de sélection resp. par ordre croissant d'intensité de consommation.

2. Appareil électroménager selon la revendication 1, **caractérisé en ce que** la fréquence de sélection décroissante resp. l'intensité de consommation croissante sont représentées par une série de chiffres en ordre croissant, lesquels indiquent des valeurs de température.

3. Appareil électroménager selon la revendication 1 ou 2, **caractérisé en ce que** les positions de réglage les plus éloignées de la position d'arrêt sont prévues pour des combinaisons de programmes concernant les programmes spéciaux rarement utilisés.

4. Appareil électroménager selon l'une des revendications 1 à 3, et plus particulièrement lave-linge automatique, **caractérisé en ce que** les combinaisons de programmes sont ordonnées en groupes («linge à bouillir / linge de couleur», «linge d'entretien facile», «laine / linge délicat». «prélavage»).

5. Appareil électroménager selon la revendication 4, **caractérisé en ce que** les groupes sont ordonnés par ordre décroissant de fréquence de sélection resp. par ordre croissant d'intensité de consommation.

6. Appareil électroménager selon la revendication 4 ou 5, **caractérisé en ce que**, dans les groupes de programmes, les chiffres indiquant les valeurs de température sont ordonnés par ordre croissant.

7. Appareil électroménager selon la revendication 3 et l'une des revendications 4 à 6, **caractérisé en ce que** sont prévus comme programmes spéciaux d'usage rare une vidange spéciale de l'eau de lessive ou de l'eau de rinçage et/ou un rinçage extra et/ou un essorage extra du linge et/ou un trempage et/ou un amidonnage et/ou un blanchiment et/ou un programme mixte.

8. Appareil électroménager selon l'une des revendications précédentes, **caractérisé en ce que** le bouton de commande est un commutateur sélecteur rotatif.

9. Appareil électroménager selon la revendication 8, **caractérisé par** la présence d'une position d'arrêt et en ce que les combinaisons de programmes sont réparties en groupes par ordre décroissant de fréquence de sélection resp. par ordre croissant d'intensité de consommation, de part et d'autre de la position d'arrêt et dans les deux sens de rotation du commutateur sélecteur rotatif.
